# EUROPÄISCHE PATENTSCHRIFT

(11) **EP 0 662 460 B1**
(45) Veröffentlichungstag und Bekanntmachung des Hinweises auf die Patenterteilung: **19.03.1997**
(21) Anmeldenummer: 94119558.8
(22) Anmeldetag: 10.12.1994
(51) Int. Cl.: C04B 11/26, C04B 18/06, C04B 28/14

(54) **Bindemittel für einen Innenputz**
Binder for interior plaster
Liant pour enduit intérieur

(30) Priorität: 16.12.1993 DE 4342927; 22.01.1994 DE 4401802
(43) Veröffentlichungstag der Anmeldung: 12.07.1995
(73) Patentinhaber: SICOWA Verfahrenstechnik für Baustoffe GmbH & Co. KG, D-52072 Aachen (DE)
(72) Erfinder: Koslowski, Thomas, Dr., D-52072 Aachen (DE); Roggendorf, Hans, Dr., D-40883 Ratingen (DE)
(74) Vertreter: Sparing - Röhl - Henseler Patentanwälte

(56) Entgegenhaltungen:
- EP-A- 0 007 610
- EP-A- 0 021 180
- EP-A- 0 181 088
- EP-A- 0 342 272
- EP-A- 0 394 557
- EP-A- 0 503 450
- DE-A- 2 826 769
- DE-A- 3 048 506
- DE-C- 4 242 200
- CHEMICAL ABSTRACTS, vol. 99, no. 12, 19.September 1983 Columbus, Ohio, US; abstract no. 92827,

## Beschreibung

Die Erfindung betrifft ein Bindemittel für einen Innenputz auf der Basis von mit Wasser bindefähigem Calciumsulfat.

Bei Innenputzen sind sogenannte Gipsputze bekannt, bei denen in der Regel ein Calciumsulfat-β-Halbhydrat enthaltend mehr als 70 Gew.-% Gips sowie Zuschläge und Zusätze oder ein Mehrphasengips, d.h. ein Calciumsulfat-β-Halbhydrat, Calciumsulfatanhydrit-II und gegebenenfalls -III enthaltender Gips, bei dem etwa 10 Gew.-% Zuschläge und Zusätze enthalten sind, verwendet wird, wobei deren Erstarrungscharakteristik entsprechend den Bedürfnissen eingestellt ist. Auch sind Kalk/Gips-Innenputze mit etwa 40 Gew.-% Calciumsulfat-β-Halbhydrat bekannt. Als Zuschläge kommen beispielsweise Feinsande und/oder Leichtzuschläge infrage. Als Zusätze werden entsprechende Beschleuniger, Verzögerer, Verdikker o.dgl. verwendet.

Die Anforderungen an derartige Innenputze sind in erster Linie gute Verarbeitbarkeit, hoher Wasseranspruch, hohe Ergiebigkeit und geringe, auf den Untergrund abgestimmte Festigkeit. Außerdem müssen sie möglichst hell sowie hygienisch unbedenklich sein. Wünschenswerterweise sollten sie auch maschinell verarbeitbar sein.

Diese Anforderungen führen neben den im Vergleich zu Branntgipsen hohen Kosten für Calciumsulfat-Alphahalbhydrat (das insbesondere gemäß dem in der DE-C-3 819 652 beschriebenen Verfahren aus dem bei der Rauchgasentschwefelung anfallenden Gips und somit aus einem Reststoff hergestellt wird) dazu, daß letzteres für den entsprechenden Einsatz bei Innenputzen nicht geeignet ist, da diese Gipsmodifikation viel zu hohe Festigkeiten aufweist, die etwa das Einschlagen von Nägeln be- bzw. verhindern, und zu Abplatzungen führt. Darüberhinaus ist die Ergiebigkeit solcher Putze zu gering.

Bei der Abgasentschwefelung von kohle- und insbesondere steinkohlegefeuerten Verbrennungsanlagen wie Kraftwerken im Sprühabsorptionsverfahren (SAV) fällt ein sehr feiner, im wesentlichen Calciumsulfithalbhydrat enthaltender Reststoff an.

Aufgabe der Erfindung ist es, ein Bindemittel für einen Innenputz der eingangs genannten Art zu schaffen, der es ermöglicht, Reststoffe zu verwerten.

Diese Aufgabe wird dadurch gelöst, daß ein feinteiliger, im wesentlichen Calciumsulfit-haltiger Reststoff aus der Abgasentschwefelung von kohlegefeuerten Verbrennungsanlagen mit einer spezifischen Oberfläche nach Blaine > 10000 cm²/g in einer Menge von 10 bis 80 Gewichtsteilen in Abhängigkeit von der spezifischen Oberfläche nach Blaine des in einer Menge von 20 bis 100 Gewichtsteilen vorhandenen Calciumsulfats, welche im Bereich von etwa 1000 bis 10000 cm²/g liegt, zum Einstellen eines Wasseranspruchs des Putzes im Bereich von 0,4 bis 0,7 enthalten ist.

Ein derartiger im wesentlichen Calciumsulfit-haltiger Reststoff, der bei der Abgasentschwefelung mittels Sprühabsorptionsverfahren etwa von kohlegefeuerten Kraftwerken anfällt, umfaßt gewöhnlich die Phasen Calciumsulfit-Halbhydrat, Kalkhydrat (Portlandit Ca(OH)₂) und Calciumcarbonat und fällt mit einer spezifischen Oberfläche nach Blaine > 10000 cm²/g an (zwar lassen sich in diesem Bereich keine Blaine-Werte mehr experimentell bestimmen, jedoch korrespondieren die entsprechenden BET-Werten mit diesen Blaine-Werten). Er besitzt beispielsweise folgende Zusammensetzung:

| | |
|---|---|
| CaO | 56 Gewichtsteile |
| Freikalk | 13 Gewichtsteile (Spannbreite 10 bis 15 |
| SO₂ | 20 Gewichtsteile |
| SO₃ | 3 Gewichtsteile |
| SiO₂ | 4 Gewichtsteile |
| Cl | 1 Gewichtsteil |
| CO₂ | 13 Gewichtsteile |
| Rest | 2 Gewichtsteile |

Die Schüttdichte eines derartigen Reststoffs liegt bei etwa 0,5 g/cm³ und der Wasserbedarf W(Wasser)/F(Feststoff)-Verhältnis bei ca. 1,4. Der Reststoff besitzt eine helle Farbe und ist hygienisch unbedenklich (in bezug auf Schwermetalle, toxische Verbindungen und Radioaktivität). Er wirkt in bezug auf das mit Wasser bindefähige Calciumsulfat des Bindemittels verzögernd, ist aber ansonsten (bis auf seinen gewöhnlich vorhandenen Freikalkanteil) inert, d.h. magert das Calciumsulfat ab und führt auch zu keinen Ausblühungen oder anderen unerwünschten Reaktionen beim fertigen Putz. Hierdurch lassen sich insbesondere Innenputze auf der Basis von Calciumsulfat-Alphahalbhydrat kostengünstig herstellen, die den oben aufgeführten Anforderungen an Innenputze genügen. Jedoch können auch unter Verwendung dieses Reststoffs Innenputze auf der Basis von Calciumsulfat-β-Halbhydrat und/oder -Anhydrit-II und/oder -Anhydrit-III und/oder -Alphahalbhydrat hergestellt werden.

Die spezifische Oberfläche des Calciumsulfats kann bei der Verwendung von Alphahalbhydrat durch den Mahlgrad des letzteren und/oder durch Beimengungen der anderen aufgeführten, im allgemeinen feineren Calciumsulfatmodifikationen eingestellt werden. Entsprechendes gilt für die anderen Calciumsulfatmodifikationen. Bei einem Calciumsulfat mit einer spezifischen Oberfläche nach Blaine von etwa 2000 bis 4000 cm²/g sind zweckmäßigerweise in dem Bindemittel etwa 20 bis 50 Gewichtsteile Calciumsulfat enthalten. Bei einem Calciumsulfat mit einer spezifischen Oberfläche nach Blaine von etwa 4000 bis 6000 cm²/g sind zweckmäßigerweise in dem Bindemittel etwa 40 bis 70 Gewichtsteile Calciumsulfat enthalten. Bei einem Calciumsulfat mit einer spezifischen Oberfläche nach Blaine von etwa 6000 bis 8000 cm²/g sind zweckmäßigerweise in dem Bindemittel etwa 70 bis 85 Gewichtsteile Calciumsulfat enthalten.

Das Bindemittel enthält vorteilhaft bis etwa 21 Gewichtsteile Kalkhydrat. Dieses Kalkhydrat kann der verwendete Reststoff bereits von sich mitbringen, der Gehalt kann aber auch durch entsprechende Zugabe von Kalkhydrat eingestellt werden. Ein Gehalt an Kalkhydrat führt vorteilhafterweise dazu, daß die Innenputzmischung alkalisch wird, was insbesondere zweckmäßig ist, wenn der Reststoff Sulfate enthält. Außerdem reagiert Kalkhydrat langfristig unter Bildung von Festigkeit. Zudem ermöglicht es ein Gehalt an Kalkhydrat, einen puzzolanischen Reaktionspartner entsprechend dem Gehalt an Kalkhydrat zuzusetzen, der zu entsprechenden festigkeitsbildenden Reaktionen führt, so daß der Gewichtsanteil an Calciumsulfat um den Gewichtsanteil von Kalkhydrat und gegebenenfalls puzzolanischem Reaktionspartner reduziert werden kann. Der puzzolanische Reaktionspartner weist zweckmäßigerweise eine spezifische Oberfläche nach Blaine von 3000 bis 6000 cm²/g auf. Hierfür kommen gemahlenes Trassmehl, Flugasche, silikatische Produktionsrückstände wie Schleifsand, Hüttensand o.dgl. infrage.

Zweckmäßigerweise wird der Chloridgehalt des Calciumsulfithaltigen Reststoffs herabgesetzt. Dies kann beispielsweise durch elektrostatische Trennverfahren, Waschen, Calcinieren o.dgl. geschehen. Insbesondere wird ein Chloridgehalt < 100 ppm angestrebt.

Dem aus Calciumsulfat und Reststoff (einschließlich Kalkhydrat) bestehenden Bindemittel können zur Herstellung der Innenputzmischung übliche Zuschläge zugesetzt werden, so etwa Kalkbrechsande bis ca. 40 Gewichtsteile und/oder Leichtzuschläge in einer Menge von 1 bis 3 Gewichtsteilen jeweils bezogen auf das Bindemittel. Außerdem können übliche Verzögerer und Beschleuniger zur Einstellung der Erstarrungscharakteristik sowie Verdicker zugesetzt werden.

Aus diesem Bindemittel hergestellte Innenputze erfüllen die eingangs aufgeführten Bedingungen und sind außerdem maschinengängig.

### Beispiel 1

Ein Innenputz wird gemäß folgender Rezeptur hergestellt:

| | |
|---|---|
| 54,87 kg | Calciumsulfat-Alphahalbhydrat (spez. Oberfläche nach Blaine von 2200 cm²/g) |
| 45,00 kg | Reststoff aus SAV gemäß obiger Zusammensetzung |
| 0,03 kg | hochviskoser, wasserlöslicher Celluloseether als Verdickungsmittel |
| 0,03 kg | Alkylpolyglykolether |
| 0,05 kg | Zitronensäureanhydrit |

Hiermit ergeben sich folgende technologische Daten:

| | |
|---|---|
| Anmachwasserbedarf W/F | 0,50 |
| Frischrohdichte | 1,51 g/cm³ |
| Ergiebigkeit | 100 l Frischmörtel/100 kg Trockenmörtel |
| Trockenrohdichte | 1,05 g/cm³ |
| Versteifungsbeginn | ca. 140 min nach dem Anmachen (einstellbar über Zitronensäureanhydritmenge) |
| Druckfestigkeit (DIN 1168) | ca. 5,6 N/mm² |
| Biegezugfestigkeit (DIN 1168) | ca. 1,6 N/mm² |

Der Innenputz ist maschinengängig und nach ca. 70 min bearbeitbar.

### Beispiel 2

Ein Innenputz wird gemäß folgender Rezeptur hergestellt:

| | |
|---|---|
| 45,71 kg | Calciumsulfat-Alphahalbhydrat (spez. Oberfläche nach Blaine von 2200 cm²/g) |
| 43,00 kg | Reststoff aus SAV gemäß obiger Zusammensetzung |
| 1,00 kg | Kalkhydrat |
| 10,00 kg | Kalkbrechsand mit einer Körnung von 0 bis 1 mm |
| 0,20 kg | hochviskoser, wasserlöslicher Celluloseether |
| 0,005 kg | Alkylpolyglykolether |
| 0,08 kg | Zitronensäureanhydrit |

Hiermit ergeben sich folgende technologische Daten:

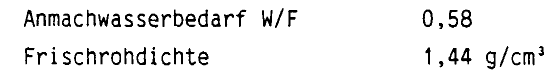

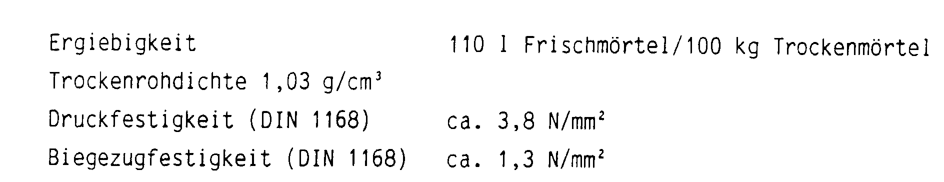

### Beispiel 3

Ein Innenputz wird gemäß folgender Rezeptur hergestellt:

| | |
|---|---|
| 42,715 kg | Calciumsulfat-Alphahalbhydrat (spez. Oberfläche nach Blaine von 2200 cm²/g) |
| 44,000 kg | Reststoff aus SAV gemäß obiger Zusammensetzung |
| 14,000 kg | Kalkbrechsand mit einer Körnung von 0 bis 1 mm |
| 0,200 kg | hochviskoser, wasserlöslicher Celluloseether |
| 0,005 kg | Alkylpolyglykolether |
| 0,080 kg | Zitronensäureanhydrit |

Hiermit ergeben sich folgende technologische Daten:

| | |
|---|---|
| Anmachwasserbedarf W/F | 0,53 |
| Frischrohdichte | 1,46 g/cm³ |
| Ergiebigkeit | 103 l Frischmörtel/100 kg Trockenmörtel |
| Trockenrohdichte | 1,04 g/cm³ |
| Druckfestigkeit (DIN 1168) | ca. 4,0 N/mm² |
| Biegezugfestigkeit (DIN 1168) | ca. 1,8 N/mm² |

### Beispiel 4

Ein Innenputz wird gemäß folgender Rezeptur hergestellt:

| | |
|---|---|
| 22,65 kg | Calciumsulfat-Alphahalbhydrat (spez. Oberfläche nach Blaine von 2200 cm²/g) |
| 40,00 kg | Reststoff aus SAV gemäß obiger Zusammensetzung |
| 2,00 kg | Kalkhydrat |
| 25,00 kg | Kalkbrechsand, 0 bis 1 mm |
| 0,25 kg | hochviskoser, wasserlöslicher Celluloseether |
| 0,02 kg | Alkylpolyglykolether |
| 0,08 kg | Zitronensäureanhydrit |

Hiermit ergeben sich folgende technologische Daten:

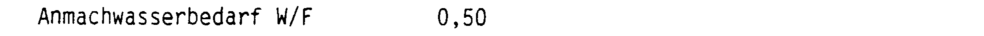

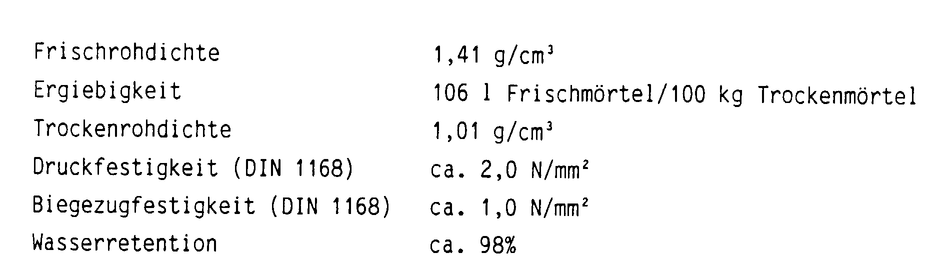

### Beispiel 5

Ein Innenputz wird gemäß folgender Rezeptur hergestellt:

| | |
|---|---|
| 33,715 kg | Calciumsulfat-Alphahalbhydrat (spez. Oberfläche nach Blaine von 2200 cm²/g) |
| 44,000 kg | Reststoff aus SAV gemäß obiger Zusammensetzung |
| 10,000 kg | Kalkbrechsand, 0 bis 1 mm |
| 0,200 kg | hochviskoser, wasserlöslicher Celluloseether |
| 0,005 kg | Alkylpolyglykolether |
| 0,080 kg | Zitronensäureanhydrit |

Hiermit ergeben sich folgende technologische Daten:

| | |
|---|---|
| Anmachwasserbedarf W/F | 0,54 |
| Frischrohdichte | 1,44 g/cm³ |
| Ergiebigkeit | 105 l Frischmörtel/100 kg Trockenmörtel |
| Trockenrohdichte | 1,01 g/cm³ |
| Druckfestigkeit (DIN 1168) | ca. 3,6 N/mm² |
| Biegezugfestigkeit (DIN 1168) | ca. 1,3 N/mm² |

### Beispiel 6

Ein Innenputz wird gemäß folgender Rezeptur hergestellt:

| | |
|---|---|
| 35,715 kg | Calciumsulfat-Alphahalbhydrat (spez. Oberfläche nach Blaine von 2200 cm²/g) |
| 44,000 kg | Reststoff aus SAV gemäß obiger Zusammensetzung |
| 10,000 kg | Steinkohlenflugasche |
| 10,000 kg | Kalkbrechsand, 0 bis 1 mm |
| 0,200 kg | hochviskoser, wasserlöslicher Celluloseether |
| 0,005 kg | Alkylpolyglykolether |
| 0,080 kg | Zitronensäureanhydrit |

Hiermit ergeben sich folgende technologische Daten:

| | |
|---|---|
| Anmachwasserbedarf W/F | 0,53 |
| Frischrohdichte | 1,40 g/cm³ |
| Ergiebigkeit | 104 l Frischmörtel/100 kg Trockenmörtel |
| Trockenrohdichte | 1,03 g/cm³ |
| Druckfestigkeit (DIN 1168) | ca. 3,8 N/mm² |
| Biegezugfestigkeit (DIN 1168) | ca. 1,5 N/mm² |

Der Anmachwasserbedarf wurde jeweils nach DIN 1168 bestimmt.

## Patentansprüche

1. Bindemittel für einen Innenputz auf der Basis von mit Wasser bindefähigem Calciumsulfat, dadurch **gekennzeichnet**, daß ein feinteiliger, im wesentlichen Calciumsulfit-haltiger Reststoff aus der Abgasentschwefelung von kohlegefeuerten Verbrennungsanlagen mit einer spezifischen Oberfläche nach Blaine > 10000 cm²/g in einer Menge von 10 bis 80 Gewichtsteilen in Abhängigkeit von der Oberfläche nach Blaine des in einer Menge von 20 bis 100 Gewichtsteilen vorhandenen Calciumsulfats, dessen Oberfläche im Bereich von etwa 1000 bis 10000 cm²/g liegt, zum Einstellen eines Wasseranspruchs des Putzes im Bereich von 0,4 bis 0,7 enthalten ist.

2. Bindemittel nach Anspruch 1, dadurch gekennzeichnet, daß als bindefähiges Calciumsulfat Alpha-, β-Halbhydrat und/oder Anhydrit verwendet wird.

3. Bindemittel nach Anspruch 1 oder 2, dadurch gekennzeichnet, daß bei einem Calciumsulfat mit einer spezifischen Oberfläche nach Blaine von etwa 2000 bis 4000 cm²/g etwa 20 bis 50 Gewichtsteile bindefähiges Calciumsulfat enthalten sind.

4. Bindemittel nach Anspruch 1 oder 2, dadurch gekennzeichnet, daß bei einem Calciumsulfat mit einer spezifischen Oberfläche nach Blaine von etwa 4000 bis 6000 cm²/g etwa 40 bis 70 Gewichtsteile bindefähiges Calciumsulfat enthalten sind.

5. Bindemittel nach Anspruch 1 oder 2, dadurch gekennzeichnet, daß bei einem Calciumsulfat mit einer spezifischen Oberfläche nach Blaine von etwa 6000 bis 8000 cm²/g etwa 70 bis 85 Gewichtsteile bindefähiges Calciumsulfat enthalten sind.

6. Bindemittel nach einem der Ansprüche 1 bis 5, dadurch gekennzeichnet, daß bis etwa 21 Gewichtsteile Kalkhydrat enthalten sind.

7. Bindemittel nach Anspruch 6, dadurch gekennzeichnet, daß ein Zusatz eines puzzolanischen Reaktionspartners entsprechend dem Gehalt an Kalkhydrat enthalten ist.

8. Bindemittel nach Anspruch 7, dadurch gekennzeichnet, daß der puzzolanische Reaktionspartner eine spezifische Oberfläche nach Blaine von 3000 bis 6000 cm²/g aufweist.

9. Bindemittel nach einem der Ansprüche 6 bis 8, dadurch gekennzeichnet, daß der 20 Gewichtsteile übersteigende Gewichtsanteil an Calciumsulfat um den Gewichtsanteil von Kalkhydrat und gegebenenfalls des puzzolanischen Reaktionspartners reduziert ist.

10. Bindemittel nach Anspruch 6, dadurch gekennzeichnet, daß ein Zusatz eines latenthydraulischen Reaktionspartners entsprechend dem Gehalt an Kalkhydrat enthalten ist.

11. Bindemittel nach einem der Ansprüche 1 bis 10, dadurch gekennzeichnet, daß Calciumsulfat-Alphahalbhydrat das bindefähige Calciumsulfat ist.

## Claims

1. Binding agent for an internal plaster based on calcium sulphate able to be bound with water, characterised in that a finely divided residue, containing essentially calcium sulphite, from the waste-gas desulphurization of coal-fired combustion plants with a specific surface in accordance with Blaine of > 10,000 cm²/g in a quantity of 10 to 80 parts by weight depending on the surface in accordance with Blaine of the calcium sulphate present in a quantity of 20 to 100 parts by weight, whereof the surface is in the region of approximately 1,000 to 10,000 cm²/g, for adjusting a water requirement of the plaster in the range of 0.4 to 0.7, is included.

2. Binding agent according to Claim 1, characterised in that Alpha-, β-semi-hydrate and/or anhydrite is used as the calcium sulphate which can be bound.

3. Binding agent according to Claim 1 or 2, characterised in that in the case of a calcium sulphate with a specific surface in accordance with Blaine of approximately 2,000 to 4,000 cm²/g, approximately 20 to 50 parts by weight calcium sulphate, which can be bound, are included.

4. Binding agent according to Claim 1 or 2, characterised in that in the case of a calcium sulphate with a specific surface in accordance with Blaine of approximately 4,000 to 6,000 cm²/g approximately 40 to 70 parts by weight calcium sulphate, which can be bound, are included.

5. Binding agent according to Claim 1 or 2, characterised in that in the case of a calcium sulphate with a specific surface in accordance with Blaine of approximately 6,000 to 8,000 cm²/g, approximately 70 to 85 parts by weight calcium sulphate, which can be bound, are included.

6. Binding agent according to one of Claims 1 to 5, characterised in that up to approximately 21 parts by weight calcium hydroxide are included.

7. Binding agent according to Claim 6, characterised in that an addition of a pozzuolanic reaction partner, corresponding to the content of calcium hydroxide, is contained.

8. Binding agent according to Claim 7, characterised in that the pozzuolanic reaction partner has a specific surface in accordance with Blaine of 3,000 to 6,000 cm²g.

9. Binding agent according to one of Claims 6 to 8, characterised in that the proportion by weight of calcium sulphate exceeding 20 parts by weight is reduced by the proportion by weight of calcium hydroxide and possibly of the pozzuolanic reaction partner.

10. Binding agent according to Claim 6, characterised in that an addition of a latent hydraulic reaction partner, corresponding to the content of calcium hydroxide, is included.

11. Binding agent according to one of Claims 1 to 10, characterised in that calcium sulphate-Alphasemi-hydrate is the calcium sulphate able to be bound.

## Revendications

1. Liant pour crépi intérieur à base de sulfate de calcium apte à la prise hydraulique, caractérisé en ce que, pour conférer au crépi une hygroscopie d'environ 0,4 à 0,7, ce liant contient un résidu finement divisé, contenant essentiellement du sulfite de calcium, issu de la désulfuration des gaz d'échappement d'installations d'incinération alimentées au charbon, ayant une aire spécifique Blaine > 10 000 cm²/g, en une quantité de 10 à 80 parties en poids en fonction de l'aire spécifique Blaine du sulfate de calcium présent en une quantité de 20 à 100 parties en poids et dont l'aire spécifique se situe dans l'intervalle d'environ 1 000 à 10 000 cm²/g.

2. Liant selon la revendication 1, caractérisé en ce que l'on utilise comme sulfate de calcium apte à la prise hydraulique un semi-hydrate alpha, bêta et/ou de l'anhydrite.

3. Liant selon la revendication 1 ou 2, caractérisé en ce que pour un sulfate de calcium ayant une aire spécifique Blaine d'environ 2 000 à 4 000 cm²/g, la teneur en sulfate de calcium apte à la prise hydraulique est d'environ 20 à 50 parties en poids.

4. Liant selon la revendication 1 ou 2, caractérisé en ce que pour un sulfate de calcium ayant une aire spécifique Blaine d'environ 4 000 à 6 000 cm²/g, la teneur en sulfate de calcium apte à la prise hydraulique est d'environ 40 à 70 parties en poids.

5. Liant selon la revendication 1 ou 2, caractérisé en ce que pour un sulfate de calcium ayant une aire spécifique Blaine d'environ 6 000 à 8 000 cm²/g, la teneur en sulfate de calcium apte à la prise hydraulique est d'environ 70 à 85 parties en poids.

6. Liant selon l'une quelconque des revendications 1 à 5, caractérisé en ce qu'il contient jusqu'à environ 21 parties en poids de chaux hydratée.

7. Liant selon la revendication 6, caractérisé en ce qu'il contient comme additif un constituant participant à une réaction pouzzolanique, en fonction de la teneur en chaux hydratée.

8. Liant selon la revendication 7, caractérisé en ce que le constituant participant à une réaction pouzzolanique présente une aire spécifique Blaine de 3 000 à 6 000 cm²/g.

9. Liant selon l'une quelconque des revendications 6 à 8, caractérisé en ce que la proportion en poids du sulfate de calcium dépassant 20 parties en poids est réduite de la proportion en poids de la chaux hydratée et éventuellement de celle du constituant participant à la réaction pouzzolanique.

10. Liant selon la revendication 6, caractérisé en ce qu'il contient comme additif un constituant participant à une réaction hydraulique latente, en fonction de la teneur en chaux hydratée.

11. Liant selon l'une quelconque des revendications 1 à 10, caractérisé en ce que le sulfate de calcium apte à la prise hydraulique est du semi-hydrate alpha de sulfate de calcium.
